# EUROPÄISCHE PATENTSCHRIFT

(11) **EP 0 582 151 B1**
(45) Veröffentlichungstag und Bekanntmachung des Hinweises auf die Patenterteilung: **01.10.1997**
(21) Anmeldenummer: 93111834.3
(22) Anmeldetag: 24.07.1993
(51) Int. Cl.: H04N 3/185

(54) **Schaltung zur Stabilisierung der Hochspannung in einem Fernsehempfänger**
High voltage stabilising circuit for a TV receiver
Circuit de stabilisation de la haute tension pour un récepteur de télévision

(30) Priorität: 05.08.1992 DE 4225807; 05.08.1992 DE 4225813
(43) Veröffentlichungstag der Anmeldung: 09.02.1994
(73) Patentinhaber: DEUTSCHE THOMSON-BRANDT GMBH, 78048 Villingen-Schwenningen (DE)
(72) Erfinder: Goseberg, Walter, D-30457 Hannover (DE); Zdarek, Drahoslav, D-30459 Hannover (DE)

(56) Entgegenhaltungen:
- EP-A- 0 052 180
- DE-A- 2 218 058
- US-A- 5 010 281

## Beschreibung

Die Erfindung geht aus von einer Schaltung gemäß dem Oberbegriff des Anspruchs 1. Eine derartige Schaltung ist bekannt durch DE-A1-2 218 058.

Mit einer derartigen Schaltung, bei der in Abhängigkeit von der Regelspannung mehr oder weniger Energie in den Fußpunkt der Hochspannungswicklung eingekoppelt wird, läßt sich eine gute statische Regelung der Hochspannung erreichen. Die dynamische Regelung indessen ist in bestimmten Fällen nicht ausreichend. Wenn z.B. mehrere aufeinanderfolgende Zeilen mit vollem Strahlstrom geschrieben werden, also bei einem sogenannten waagerechten Weißbalken, kommt es zu einer plötzlichen länger andauernden starken Belastung der Hochspannungsquelle. Die an der Anode der Bildröhre wirksame Bildröhrenkapazität wird dann stark entladen und kann nicht schnell genug nachgeladen werden. Dadurch kommt es zu einem Einbruch der Hochspannung und zu Störungen in der Bildhelligkeit und der Bildgeometrie.

Es ist auch bekannt, einen zusätzlichen Kondensator zwischen der Anode der Bildröhre und Erde einzuschalten, um die an der Anode wirksame Kapazität zu erhöhen. Bei einem hohen Strahlstrom von z.B. 6 mA wird die an der Anode wirksame Kapazität, bestehend aus der Bildrohrkapazität von etwa 3 nF und dem zusätzlichen Kondensator von ebenfall etwa 3 nF immer noch zu stark entladen. Um diese Entladung zur Stabilisierung der Hochspannung auszugleichen, muß somit der Parallelschaltung aus Bildröhre und zusätzlichem Kondensator Energie zugeführt werden. Diese Energiezufuhr erfolgt durch die beschriebene Regelspannungsquelle im Fußpunkt der Hochspannungswicklung. Das bedeutet, daß die Energiezufuhr nur über die Hochspannungswicklung erfolgen kann. Die Hochspannungswicklung hat aber einen dynamischen Innenwiderstand in der Größenordnung von etlichen hundert kOhm. Die Energiezufuhr zu der Anode der Bildröhre kann also nur über diesen relativ hochohmigen Weg erfolgen. Bei hohem Strahlstrom kann daher die der Kapazität an der Anode der Bildröhre entnommene Energie durch die Regelschaltung nicht mehr ausgeglichen werden, da der Entladestrom über die Bildröhre größer ist als der Nachladestrom von der Regelspannungsquelle über die Hochspannungswicklung. Es kommt dann bei länger andauerndem hohen Strahlstrom zu einem unerwünschten Abfall der Hochspannung an der Bildröhre.

Der Erfindung liegt die Aufgabe zugrunde, das dynamische Regelverhalten der beschriebenen Schaltung mit einfachen tungstechnischen Mitteln zu verbessern, derart, daß auch bei hohem Strahlstrom die an der Anode der Bildröhre wirksame Kapazität ausreichend schnell nachgeladen wird.

Diese Aufgabe wird durch die im Anspruch 1 angegebene Erfindung gelöst. Vorteilhafte Weiterbildungen der Erfindung sind in den Unteransprüchen angegeben.

Bei der erfindungsgemäßen Lösung sind also an den Fußpunkt der Hochspannungswicklung zwei Kondensatoren etwa gleich großer Kapazität angeschlossen, wobei der erste Kondensator zwischen dem Fußpunkt und Erde und der zweite Kondensator zwischen dem Fußpunkt und der Anode der Bildröhre liegt. Diese beiden Kondensatoren erfüllen dabei unterschiedliche Aufgaben und ergänzen einander in ihrer Wirkung in dem Sinne, daß eine Regelschaltung mit einwandfreier Stabilität, hohem Wirkungsgrad und einem guten dynamischen Regelverhalten geschaffen wird.

Der erste, gegen Erde geschaltete Kondensator dient im wesentlichen zur Siebung der Spannung an dem Fußpunkt der spannungswicklung. Da dieser Kondensator auf Erde bezogen ist, besteht hier keine Gefahr unerwünschter Phasenbeziehungen, die zu Regelschwingungen führen können. Das ist insbesondere aus folgenden Grunde vorteilhaft. Die Regelschaltung wird von einem Teil der Hochspannung gesteuert. Da die Hochspannung etwa 30 kV beträgt, der Regelschaltung aber nur eine Spannung in der Größenordnung von 2 Volt zugeführt werden kann, muß die Hochspannung und damit auch die von der Hochspannungsänderung abhängige Regelspannung etwa um den Faktor 15000 heruntergeteilt werden. Wegen dieser starken Teilung ist im Weg der Regelspannung eine relativ hohe Verstärkung erforderlich. Um Regelschwingungen zu vermeiden, muß daher im Weg der Regelspannung eine relativ hohe Gegenkopplung eingeführt werden. Durch den genannten ersten Kondensator, durch den der Fußpunkt wechselspannungsmäßig "kalt" gemacht wird, kann die Gegenkopplung im Weg der Regelspannung verringert und damit die Regelverstärkung erhöht werden. Der erste Kondensator braucht nicht für die volle Hochspannung bemessen zu sein, sondern nur für den Maximalwert der im Fußpunkt wirksamen Regelspannung von etwa 3 kV. Der erste Kondensator hat darüberhinaus noch folgende vorteilhafte Wirkung: Bei einem Überschlag in der Bildröhre würde ein Spannungssprung an der Anode der Bildröhre über den zweiten Kondensator praktisch in voller Höhe auf den Fußpunkt der spannungswicklung gelangen und könnte dort Bauteile der an diesen Fußpunkt angeschlossenen Regelschaltung gefährden. Der zwischen dem Fußpunkt und Erde liegende erste Kondensator verhindert durch seine Siebwirkung das Auftreten derartiger Störspitzen am Fußpunkt der Hochspannungswicklung und damit an der Sekundärwicklung des Regelübertragers.

Der zweite Kondensator indessen wirkt auch als Siebkondensator am Fußpunkt, hat darüberhinaus aber folgende vorteilhafte Wirkung. Dadurch, daß dieser Kondensator zwischen dem Fußpunkt der Hochspannungswicklung und dem Hochspannungsanschluß liegt, wird bei der dynamischen Regelung die hochohmige Hochspannungswicklung umgangen. Der zweite Kondensator bildet einen erwünschten niederohmigen Ladeweg für die Kapazität an der Anode der Bildröhre, so daß auch bei hohem Strahlstrom eine ausreichende Nachladung dieser Kapazität erfolgen kann. Während bei den bekannten Schaltungen die Nachladung über die hochohmige Hochspannungswicklung mit einem Innenwiderstand von einigen hundert kOhm erfolgt, ist nunmehr in dem Nachladeweg nur noch der Innenwiderstand der Regelspannungsquelle wirksam, der deutlich unter hundert kOhm liegt. Die Wirkung dabei ist folgende: Es sei angenommen, daß der Strahlstrom für mehrere Zeilen einen hohen Wert von 6 mA annimmt und demzufolge die von der Hochspannungswicklung erzeugte Hochspannung sinkt. Dann wird durch die Wirkung der Regelschaltung in den Fußpunkt der Hochspannungswicklung eine erhöhte Spannung eingekoppelt, um die Hochspannung zu stabilisieren. Dieser Spannungssprung gelangt über den zweiten Kondensator auch auf die Hochspannungsklemme und wirkt dort zusätzlich zur Erhöhung der an sich sinkenden Hochspannung im Sinne einer Stabilisierung. Der am Fußpunkt wirksame Spannungssprung in positiver Richtung gelangt also geteilt durch den Spannungsteiler aus dem zweiten Kondensator und der Kapazität an der Anode der Bildröhre in vorteilhafter Weise auf die Bildrohrkapazität und bewirkt dort die bei hohem Strahlstrom notwendige Nachladung dieser Kapazität.

Die Erfindung wird im folgenden anhand der Zeichnung an zwei Ausführungsbeispielen erläutert. Darin zeigen
- Fig. 1: eine erfindungsgemäße Schaltung für einen Fernsehempfänger,
- Fig. 2, 3: Ersatzschaltbilder zur Erläuterung des Unterschiedes in der Wirkungsweise zwischen der bekannten Schaltung und der erfindungsgemäßen Schaltung und
- Fig. 4: ein Schaltungsbeispiel gemäß einer Weiterbildung der Erfindung.

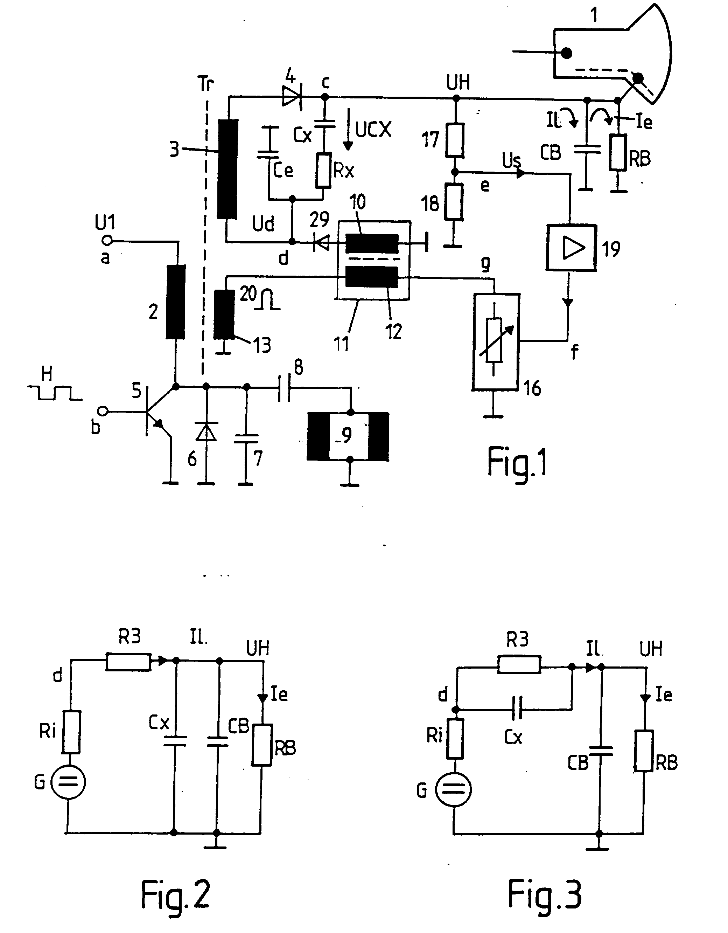

Fig. 1 zeigt eine Schaltung zur Zeilenablenkung und Hochspannungserzeugung für die Bildröhre 1. Dargestellt sind der Hochspannungstransformator Tr mit der an die Betriebsspannung U1 an der Klemme a angeschlossenen Primärwicklung 2 und der Hochspannungswicklung 3, die die Hochspannung UH an der Klemme c liefernde Diode 4, der mit der Klemme b mit der zeilenfrequenten Spannung H gesteuerte Schalttransistor 5, die Rücklaufdiode 6, der Rücklaufkondensator 7, der Tangenskondensator 8 und die Zeilenablenkspulen 9.

In den Fußpunkt d der Hochspannungswicklung 3 ist die Sekundärwicklung 10 des Regelübertragers 11 eingeschaltet. Dessen Primärwicklung 12 ist einerseits mit der Zusatzwicklung 13 des Transformators Tr und andererseits mit der regelbaren Impedanz 16 verbunden. An die Hochspannungsklemme c ist die Reihenschaltung aus dem hochohmigen Bleeder 17 von etwa 1 GOhm und dem demgegenüber niederohmigen Widerstand 18 von etwa 1 MOhm angeschlossen. Vom Abgriff e wird die Stellgröße Us abgegriffen und über den Verstärker 19 dem Regeleingang f des Impedanz 16 zugeführt. Us ist somit von den Änderungen der Hochspannung UH abhängig.

Die Wirkungsweise ist folgende. Die Zusatzwicklung 13 liefert einen Energieimpuls 20, der über den Regelübertrager 11 am Fußpunkt d eine gleichgerichtete Spannung Ud erzeugt, die von der Amplitude des an der Primärwicklung 12 wirksamen Anteils des Impulses 20 abhängig ist. Die Amplitude dieser Spannung ist daher abhängig von dem jeweiligen Wert der Impedanz 16. Zur Erläuterung werden die beiden Grenzfälle betrachtet. Wenn der Impedanz 16 sehr hochohmig ist, ist der Strom durch die Primärwicklung 12 praktisch null. Die in den Fußpunkt d eingekoppelte Spannung ist dann ebenfalls fast null, so daß die Hochspannung UH an der Klemme c einen minimalen Wert hat. Wenn die Impedanz 16 niederohmig oder null ist, ist der Punkt g geerdet. Es fließt dann ein maximaler Strom durch die Primärwicklung 12, so daß die in den Fußpunkt d eingekoppelte Spannung Ud ihre maximale Amplitude hat. Da sich die Spannung Ud zu der Spannung an der Hochspannungswicklung 3 addiert, hat dann die Hochspannung UH ihren Maximalwert. Zwischen diesen Grenzwerten erfolgt dann die Regelung durch Us im Sinne einer Stabilisierung der Hochspannung UH.

Die Sekundärwicklung 10 ist mit dem Fußpunkt d über eine Gleichrichterschaltung verbunden, die die Diode 29 und die beiden Kondensatoren Ce und Cx enthält. Ce ist mit Erde verbunden und wirkt als der beschriebene Siebkondensator zur Erzielung einer stabilen Regelschaltung. Cx ist indessen mit der Hochspannungsklemme c verbunden und wirkt in der beschriebenen Weise zur Verbesserung des dynamischen Regelverhaltens. Wenn z.B. der Strahlstrom ansteigt, wird die Spannung Ud am Fußpunkt d größer, um die Hochspannung UH zu stabilisieren. Die Spannung UH bleibt annähernd konstant. Das bedeutet, daß die Spannung UCX an Cx kleiner wird, also Cx entladen wird. Diese Ladung fließt jetzt in die Bildrohr- kapazität CB hinein. Das ist im Sinne einer Stabilisierung der Hochspannung gerade in diesem Fall vorteilhaft, weil durch den erhöhten Strahlstrom eine erhöhte Entladung von CB über den Bildrohrwiderstand RB stattfindet. Es wird also gewissermaßen Ladung zusätzlich in CB übertragen, die dort wegen des erhöhten Strahlstromes notwendig und erwünscht ist.

Fig. 2 zeigt das Ersatzschaltbild der bekannten Schaltung. Dargestellt sind der Generator G für die dem Fußpunkt d zugeführte Regelspannung Ud, dessen Innenwiderstand Ri von einigen zehn kOhm, der dynamische Innenwiderstand R3 der Hochspannungswicklung 3, der durch die Bildröhre dargestellte Widerstand RB, bei hohem Strahlstrom von 6 mA etwa 5 MOhm, die Bildrohrkapazität CB und der zusätzliche Kondensator Cx zur Erhöhung der an der Anode der Bildröhre wirksamen Kapazität. Bei einem hohem Strahlstrom wird die Kapazität Cx+CB durch einen Entladestrom Ie über RB entladen. Der von G zur Stabilisierung gelieferte Nachladestrom Il ist jedoch, bedingt durch den hochohmigen Widerstand R3, zu klein, um die durch Ie bewirkte Entladung von Cx und CB auszugleichen. Die an RB stehende Hochspannung UH sinkt dann zu stark ab.

In Fig. 3 ist der zusätzliche Kondensator Cx gemäß Fig. 1 nicht unmittelbar zu CB parallel geschaltet, sondern liegt wie in Fig. 1 zwischen dem Fußpunkt d und der Anode der Bildröhre. Es ist ersichtlich, daß bei sonst gleicher Regelwirkung nunmehr der hochohmige Widerstand R3 umgangen ist. Die zur Regelung der Hochspannung von G gelieferte Energie kann jetzt über einen wesentlichen niederohmigen Weg von einigen zehn kOhm der Kapazität CB zur Stabilisierung der Hochspannung zugeführt werden. Die Nachladezeitkontante für Il ist also gegenüber Fig. 2 in vorteilhafter Weise beträchtlich verringert.

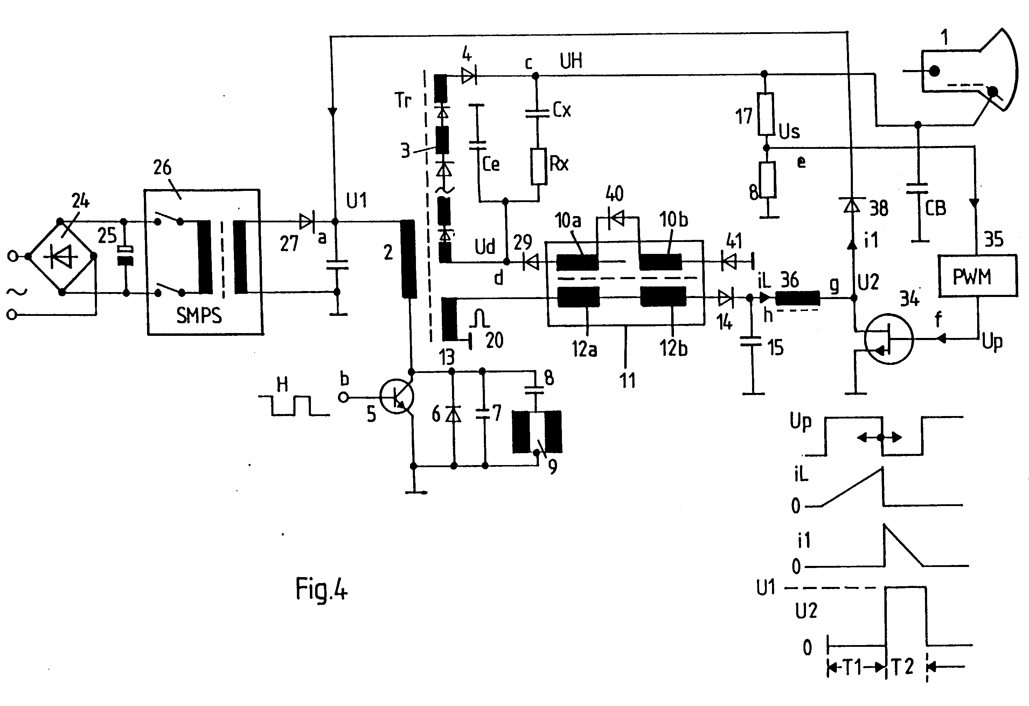

Fig. 4 zeigt eine Weiterbildung der Schaltung nach Fig. 1 mit einer besonders vorteilhaften Regelschaltung. Zusätzlich sind dargestellt der Netzgleichrichter 24, der Ladekondensator 25, das Schaltnetzteil 26, das über die Diode 27 an der Klemme a die Betriebsspannung U1 erzeugt. Die gesteuerte Impedanz 16 von Fig. 1 ist realisiert durch die Diode 14, den Kondensator 15, die Speicherdrossel 36 und den MOSFET-Schalttransistor 34, der außerdem über die Diode 38 mit der Betriebsspannung U1 verbunden ist. Der Transistor 34 wird von dem Impulsweitenmodulator 35 mit einer durch die Stellgröße Us impulsweitenmodulierten Spannung Up gesteuert.

Die Wirkungsweise ist folgende. Während der Zeit T1 ist der Transistor 34 durch Up leitend gesteuert, der Punkt g also geerdet. Der über die Diode 14 geladene Kondensator 15 liefert dadurch einen Ladestrom iL über die Speicherdrossel 36. Die im Kondensator 15 über den Gleichrichter 14 eingespeiste Energie wird also in eine Energie in Form eines Stromes iL in der Speicherdrossel 36 umgesetzt. iL steigt während T1 sägezahnförmig an. Am Ende von T1 wird der Transistor 34 durch Up gesperrt. Dadurch entsteht am Punkt g der Impuls U2. U2 verursacht einen Strom i1 über die Diode 38 in die Betriebsspannungsklemme a und begrenzt gleichzeitig den Maximalwert von U2 auf den Wert von U1. Die Diode 38 hat somit eine Doppelfunktion, nämlich einmal die Rücklieferung von der in der Speicherdrossel 36 gespeicherten Energie in die Betriebsspannungsklemme a und zur Begrenzung von U2, die ohne eine derartige Begrenzung den Transistor 34 gefährden würde. Die Regelung zur Stabilisierung der Hochspannung erfolgt nun dadurch, daß sich entsprechend dem Wert von Us das Ende des Zeitraumes T1 verschiebt. Wenn z.B. die Hochspannung UH sinkt, sinkt auch Us. Durch die Wirkung des Modulators 35 wird die Zeit T1 für den positiven Anteil von Up länger, so daß iL einen größeren Endwert annimmt. Dadurch wird der Kondensator 15 weiter entladen. Die Spannung am Punkt h sinkt also weiter ab. Das bedeutet, daß der Strom über die Primärwicklung 12 und damit die Amplitude des Impulses an der Sekundärwicklung 10 ansteigen. Dadurch steigt die positive Spannung Ud am Punkt d an. Dadurch wird UH wieder größer und somit die angenommene Verringerung von UH ausgeregelt. Je nach Arbeitspunkt der Regelung wird also der Wicklung 13 mehr oder weniger Energie entnommen und der Sekundärwicklung 10 des Regelübertragers 11 zugeführt. Die Schaltung hat nur eine geringe Verlustleistung, weil die Bauteile 14, 12, 15, 36, 34, 38 von Natur aus verlustfreie Bauteile sind. Auch die in Form von iL in die Speicherdrossel 36 gelangende Energie wird wie beschrieben über die Diode 38 zurückgewonnen.

Eine weitere Besonderheit in Fig. 4 besteht in folgendem: Die Sekundärwicklung 10 des Regelübertragers 11 ist nach dem Diodensplitprinzip aufgebaut. Die Sekundärwicklung 10 ist in zwei Teilewicklungen 10a und 10b aufgeteilt, zwischen denen die Diode 40 liegt, während das rechte Ende der Teilwicklung 10b über die Diode 41 mit Erde verbunden ist. Diese Ausbildung des Regelübertragers als Dioden-Splittransformator hat folgende Vorteile. Die Impulsspannung an der Sekundärwicklung verteilt sich auf mehrere Teilwicklungen und mehrere Dioden. Bei einer durchgehenden Sekundärwicklung 10 gemäß Fig. 1 mit etwa 1000 Windungen würde an der Sekundärwicklung eine Spannung bis zu 3 kV stehen. Bei der Aufteilung gemäß Fig. 4 ist die Spannungsbelastung der Bauteile von etwa 3 kV auf 750 Volt herabgesetzt. Durch diese Aufteilung der impulsförmigen Spannung an der Sekundärwicklung 10 werden die Spannungsbelastung und die Gefährdung der Bauteile beträchtlich verringert. Dadurch kann ein Regelübertrager 11 mit geringeren Abmessungen und geringeren Abständen der spannungsführenden Teile realisiert werden. Durch die Aufteilung der Sekundärwicklung als Kammerwicklung werden außerdem gegenüber einer durchgehenden Wicklung Oberwellen und Eigenschwingungen der Sekundärwicklung verringert. Ein weiterer Vorteil besteht darin, daß der Innenwiderstand der durch den Regelübertrager 11 gebildeten Spannungsquelle für die Regelspannung Ud am Punkt d ebenfalls verringert und dadurch die Nachladung von CB im Sinne einer Stabilisierung der Hochspannung UH weiter verbessert wird.

Einer Weiterbilding der Erfindung liegt die Aufgabe zugrunde, einen Regelübertrager für die beschriebene Stabilisierungsschaltung zu schaffen, der fertigungstechnisch rationell herstellbar ist und eine Spannungsfestigkeit von mehreren kV aufweist. Diese Aufgabe wird durch die im Anspruch 6 angegebene Weiterbildung der Erfindung gelöst. Vorteilhafte Weiterbildungen sind in den Unteransprüchen 7 - 10 angegeben.

Durch die Kombination der für unterschiedliche Zwecke bekannten Merkmale wird ein Regelübertrager geschaffen, der eine Vielzahl von Vorteilen gegenüber einem einfachen Regelübertrager mit Primärwicklung und Sekundärwicklung hat. Durch die Aufteilung der Impulsspannung an der Sekundärwicklung auf mehrere Sekundärwicklungen und mehrere Dioden wird die impulsartige Spannungsbelastung der Bauteile beträchtlich herabgesetzt, z.B. von 3 kV auf 750 Volt. Die Gefährdung dieser Bauteile wird dadurch wesentlich verringert. Daher ist bei gleichen Bauteilen auch eine höhere Spannung an der Sekundärwicklung beherrschbar. Insgesamt ist es möglich, über die Sekundärwicklungen Spannungen bis zu 6 kV in den Fußpunkt der Hochspannungswicklung einzukoppeln. Durch die Aufteilung der Hochspannung auf mehrere Wicklungen und Dioden wird auch die Spannungsbelastung gegenüber dem Kern herabgesetzt. Da jeweils an einer Wicklung nur ein Teil der insgesamt an der Sekundärwicklung stehenden Impulsspannung steht, lassen sich wesentlich geringere Abstände der Kontakte und geringere Abmessungen des gesamten Trafos erzielen. Der gesamte Regelübertrager wird dadurch wesentlich kleiner, billiger und besser herstellbar. Durch die Aufteilung der Wicklungen auf mehrere Kammern ist auch die Abstimmung des Übertragers auf eine bestimmte Harmonische der Zeilenfrequenz besser beherrschbar. Durch die verringerte Eigenkapazität der Wicklung in einer Kammer gegenüber der Eigenkapazität einer einzigen durchgehenden Wicklung ist eine Abstimmung auf höhere Frequenzen möglich. Dadurch kann insbesondere der Innenwiderstand der durch den Regelübertrager gebildeten Regelspannungsquelle herabgesetzt werden.

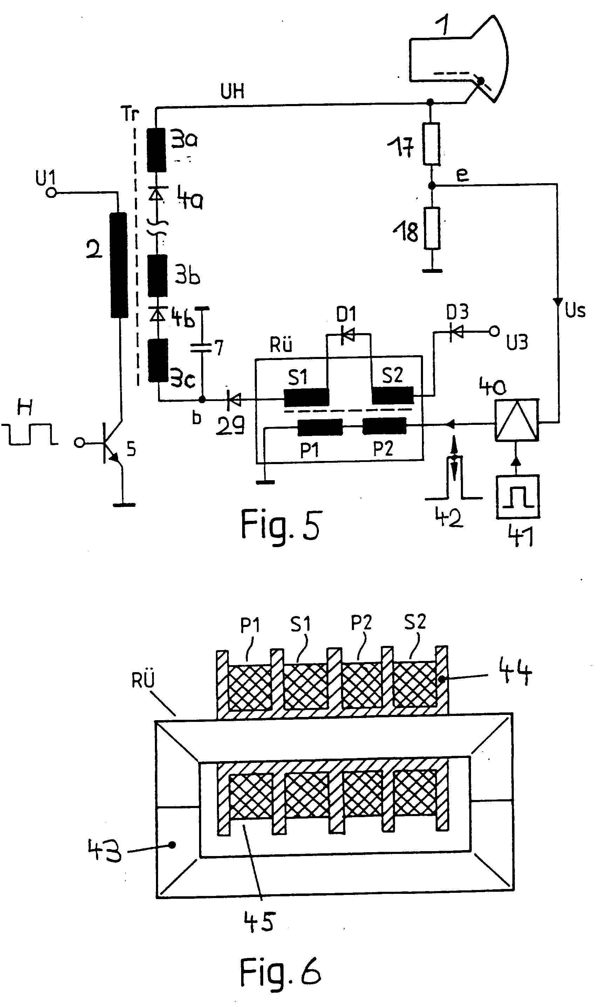

Diese Weiterbildung der Erfindung wird im folgenden anhand der Figuren 5 und 6 erläutert.

Fig. 5 zeigt den Hochspannungstransformator Tr mit der an die Betriebsspannung U1 angeschlossenen Primärwicklung 2, den Hochspannungswicklungen 3a, 3b, 3c, den Hochspannungsgleichrichterdioden 4a, 4b und dem durch die zeilenfrequente Schaltspannung H gesteuerten Leistungsschalttransistor 5. Die mit Tr erzeugte Hochspannung UH von 30 bis 35 kV ist an die Anode der Bildröhre 1 angelegt.

In den Fußpunkt b der Hochspannungswicklung 3, also das untere Ende der Teilwicklung 3c, ist der Regelübertrager RÜ eingeschaltet. Der Regelübertrager RÜ enthält zwei getrennte Sekundärteilwicklungen S1 und S2, zwischen denen die Diode D1 liegt. Die Teilwicklung S1 ist über die Diode 29 mit dem Fußpunkt b der Hochspannungswicklung 3, nämlich dem Ende der Wicklung 3c verbunden, während die Teilwicklung S2 über die Diode D3 an die konstante Spannung U3 angeschlossen ist. Die Diode D2 ist durch den Kondensator 7 zu einer Gleichrichterschaltung ergänzt.

An die Anode der Bildröhre 1 ist der Spannungsteiler aus dem hochohmigen Bleederwiderstand 17 von etwa 900 MOhm und dem demgegenüber niederohmigen Widerstand 18 von etwa 1 MOhm angeschlossen. An dem Abgriff e wird eine zur Hochspannungsänderung proportionale Stellgröße Us abgenommen und dem Modulator 40 zugeführt, an dessen anderen Eingang der Ausgang des Impulsgenerators 41 angeschlossen ist. Der Modulator 40 erzeugt Impulse 42, deren Amplitude durch Us moduliert und von der Hochspannungsänderung abhängig ist. Die Impulse 42 werden der aus zwei Teilwicklungen P1 und P2 bestehenden Primärwicklung P des Regelübertragers RÜ zugeführt. Am Fußpunkt b entsteht dadurch eine gleichgerichtete Spannung, die von der Hochspannungsänderung abhängig ist und zu der an der Hochspannungswicklung 3 selbst erzeugten Hochspannung derart addiert wird, daß die an der Anode der Bildröhre 1 wirksame Hochspannung UH stabilisiert wird.

Fig. 6 zeigt den konstruktiven Aufbau des Regelübertragers RÜ. Auf einem Schenkel des ohne Luftspalt ausgebildeten Kerns 43 ist der Kammerspulenkörper 44 mit insgesamt vier Kammern 45 gelagert. In den Kammern 45 liegen die Wicklungen P1, P2, S1, S2, wobei abwechselnd eine Primärwicklung und eine Sekundärwicklung aufeinanderfolgen, Primärwicklung und Sekundärwicklung also ineinandergeschachtelt sind. Die Lösung gemäß Fig. 5 und 6 ist auch bei einer Schaltung gemäß Fig. 4 vorteilhaft anwendbar.

## Patentansprüche

1. Schaltung zur Stabilisierung der Hochspannung in einem Fernsehempfänger mit einem Transformator (Tr) mit einer Hochspannungswicklung (3) und einem Regelübertrager (11), dessen Primärwicklung (12) eine impulsförmige Regelspannung zugeführt und dessen Sekundärwicklung (10) über eine Diode (29) mit dem Fußpunkt (d) der Hochspannungswicklung (3) verbunden ist, **dadurch gekennzeichnet,** daß der Fußpunkt (d) über einen ersten Kondensator (Ce) mit Erde und über einen zweiten Kondensator (Cx) mit der Hochspannungsklemme (c) verbunden ist.

2. Schaltung nach Anspruch 1, **dadurch gekennzeichnet**, daß die Kapazitäten der beiden Kondensatoren (Ce, Cx) in der gleichen Größenordnung liegen.

3. Schaltung nach Anspruch 1, **dadurch gekennzeichnet**, daß die Primärwicklung (12) zwischen einer Impulsquelle (13) und einer in Abhängigkeit von der Hochspannungsänderung gesteuerten, veränderbaren Impedanz (16) liegt.

4. Schaltung nach Anspruch 3, **dadurch gekennzeichnet**, daß die Impedanz durch einen Schalttransistor (34) gebildet ist, an dessen Basis eine durch die Hochspannungsänderung pulsweitenmodulierte Schaltspannung (Up) angelegt und dessen Kollektor über eine Speicherdrossel (36) mit einem Kondensator (15) verbunden ist, wobei der Kondensator (15) über die Reihenschaltung einer Diode (14) und der Primärwicklung (12) des Regelübertragers (11) mit der Impulsquelle (13) verbunden ist, und daß der Kollektor des Schalttransistors (34) über eine weitere Diode (38) mit einer Betriebsspannung (U1) verbunden ist (Fig. 4).

5. Schaltung nach Anspruch 4, **dadurch gekennzeichnet**, daß der Schalttransistor (34) ein MOSFET ist.

6. Schaltung nach Anspruch 4, **dadurch gekennzeichnet**, daß die Betriebsspannung die Betriebsspannung (U1) für die Schaltung zur Erzeugung der Hochspannung (UH) ist.

7. Schaltung nach Anspruch 1, **gekennzeichnet** durch folgende Merkmale:
a) Die Primärwicklung (P) und die Sekundärwicklung (S) des Übertragers (RÜ) sind je als Kammerwicklung mit mehreren Kammern (45) ausgebildet,
b) die Teilwicklungen (P1, P2) der Primärwicklung (P) liegen in einer ersten Gruppe und die Teilwicklungen (S1, S2) der Sekundärwicklung (S) in einer zweiten Gruppe von Kammern (45),
c) die Kammern (45) der beiden Gruppen sind andergeschachtelt,
d) die Sekundärwicklung (S) ist nach Art eines Diodensplit-Transformators mit zwischen den Teilwicklungen (S1, S2) liegenden Dioden (D1, D4, D5) ausgebildet,
e) der Kern (43) des Übertragers (RÜ) ist ohne Luftspalt ausgebildet.

8. Schaltung nach Anspruch 7, **dadurch gekennzeichnet**, daß die Sekundärwicklung (S) des Übertragers (RÜ) mit der Hochspannungswicklung (3) sowie mit Erde oder einer Bezugsspannung (U3) über je eine weitere Diode (29, D3) verbunden ist.

9. Schaltung nach Anspruch 7, **dadurch gekennzeichnet**, daß die Primärwicklung (P) in zwei Teilwicklungen (P1, P2) und die Sekundärwicklung (S) in drei Teilwicklungen (S1, S2, S3) mit jeweils in Reihe geschalteten Dioden (D2, D4, D5, D3) aufgeteilt ist (Fig. 5).

10. Schaltung nach Anspruch 7, **dadurch gekennzeichnet**, daß die Primärwicklung (P) zwischen einer Impulsquelle (13) und einer in Abhängigkeit von der Hochspanungsänderung gesteuerten, veränderbaren Impedanz liegt.

## Claims

1. Circuit for the stabilisation of the high tension in a television receiver including a transformer (Tr) having a high tension winding (3) and a regulating transformer (11) to whose primary winding (12) a pulse shaped regulating voltage is supplied and whose secondary winding (10) is connected to the base point (d) of the high tension winding (3) via a diode (29), characterised in that, the base point (d) is connected via a first capacitor (Ce) to earth and via a second capacitor (Cx) to the high tension terminal (c).

2. Circuit in accordance with Claim 1, characterised in that, the capacitances of the two capacitors (Ce, Cx) are of the same order of magnitude.

3. Circuit in accordance with Claim 1, characterised in that, the primary winding (12) lies between a pulse source (13) and a variable impedance (16) controlled in dependence on the alteration of the high tension.

4. Circuit in accordance with Claim 3, characterised in that, the impedance is formed by a switching transistor (34) to whose base a switching voltage (Up) pulse width modulated by the alteration of the high tension is applied and whose collector is connected via a storage choke (36) to a capacitor (15) wherein the capacitor (15) is connected via the series circuit of a diode (14) and the primary winding (12) of the regulating transformer (11) to the pulse source (13) and that the collector of the switching transistor (34) is connected via a further diode (38) to an operating voltage (U1) (Fig. 4).

5. Circuit in accordance with Claim 4, characterised in that, the switching transistor (34) is a MOSFET.

6. Circuit in accordance with Claim 4, characterised in that, the operating voltage is the operating voltage (U1) for the circuit for the generation of the high tension UH.

7. Circuit in accordance with Claim 1, characterised by the following features:
a) The primary winding (P) and the secondary winding (S) of the regulating transformer (RÜ) are each formed as a cellular winding having a plurality of chambers (45),
b) the partial windings (P1, P2) of the primary winding (P) are located in a first group and the partial windings (S1, S2) of the secondary winding (S) in a second group of chambers (45),
c) the chambers (45) of the two groups are internestled,
d) the secondary winding (S) is formed in the manner of a split-diodes transformer having diodes (D1, D4, D5) located between the partial windings (S1, S2),
e) the core (43) of the regulating transformer (RÜ) is formed without an air gap.

8. Circuit in accordance with Claim 7, characterised in that, the secondary winding (S) of the regulating transformer (RÜ) is connected to the high tension winding (3) and also to earth or to a reference voltage (U3) via a respective further diode (29, D3).

9. Circuit in accordance with Claim 7, characterised in that, the primary winding (P) is divided into two partial windings (P1, P2) and the secondary winding (S) into three partial windings (S1, S2, S3) having respective diodes (D2, D4, D5, D3) connected in series (Fig. 5).

10. Circuit in accordance with Claim 7, characterised in that, the primary winding (P) is located between a pulse source (13) and a variable impedance controlled in dependence on the alteration of the high tension.

## Revendications

1. Un circuit de stabilisation de la haute tension dans un récepteur de télévision doté d'un transformateur (Tr) avec enroulement haute tension (3) et un transformateur de réglage (11) dont l'enroulement primaire (12) reçoit une tension de réglage et dont l'enroulement secondaire (10) est relié à la base (d) de l'enroulement haute tension (3) via une diode (29), **caractérisé en ce que** la base (d) est reliée à la terre via un premier condensateur (Ce) et à la borne haute tension (c) via un second condensateur (Cx).

2. Un circuit selon la revendication 1, **caractérisé en ce que** les deux condensateurs (Ce, Cx) présentent des capacités similaires.

3. Un circuit selon la revendication 1, **caractérisé en ce que** l'enroulement primaire (12) se situe entre la source d'impulsions (13) et une impédance modifiable (16) commandée en fonction de la modification de la haute tension.

4. Un circuit selon la revendication 3, **caractérisé en ce que** l'impédance est établie par un transistor de commutation (34) à la base duquel est appliquée une tension de commutation (Up) modulée en largeur d'impulsion en fonction de la modification de la haute tension et dont le collecteur est relié à un condensateur (15) via une bobine mémoire (36). Le condensateur (15) est relié à la source d'impulsions (13) via le circuit en série composé d'une diode (14) et de l'enroulement primaire (12) du transformateur de réglage (11). Le collecteur du transistor de commutation (34) est relié à une tension de fonctionnement (U1) via une autre diode (38) (voir figure 4).

5. Un circuit selon la revendication 4, **caractérisé en ce que** le transistor de commutation (34) est de type MOFSET.

6. Un circuit selon la revendication 4, **caractérisé en ce que** la tension de fonctionnement est la tension de fonctionnement (U1) pour le circuit de génération de la haute tension (UH).

7. Un circuit selon la revendication 1, **caractérisé** par les propriétés suivantes :
a) L'enroulement primaire (P) et l'enroulement secondaire (S) du transformateur (RÜ) sont des enroulements composés de plusieurs compartiments (45),
b) les enroulements partiels (P1, P2 de l'enroulement primaire (P) se trouvent dans un premier groupe de compartiments et les enroulements partiels (S1, S2) de l'enroulement secondaire (S) se trouvent dans un second groupe de compartiments (45),
c) les compartiments (45) des deux groupes sont intercalés,
d) l'enroulement secondaire (S) est conçu selon le modèle d'un transformateur à diodes séparées avec des diodes (D1, D4, D5) situées entre les enroulements partiels (S1, S2),
e) le noyau (43) du transformateur de réglage (RÜ) est conçu sans entrefer.

8. Un circuit selon la revendication 7, **caractérisé en ce que** l'enroulement secondaire (S) du transformateur (RÜ) est relié à l'enroulement haute tension (3) ainsi qu'à la terre ou à une tension de référence (U3) à chaque fois via une diode supplémentaire (29, D3).

9. Un circuit selon la revendication 7, **caractérisé en ce que** l'enroulement primaire (P) est divisé en deux enroulements partiels (P1, P2) et l'enroulement secondaire (S) en trois enroulements partiels (S1, S2, S3) avec à chaque fois des diodes installées en série (D2, D4, D5, D3) (voir figure 5).

10. Un circuit selon la revendication 7, **caractérisé en ce que** l'enroulement primaire (P) se situe entre une source d'impulsions (13) et une impédance modifiable (16) commandée en fonction de la modification de la haute tension.
